# EUROPÄISCHE PATENTSCHRIFT

(11) **EP 0 568 551 B1**
(45) Veröffentlichungstag und Bekanntmachung des Hinweises auf die Patenterteilung: **29.03.1995**
(21) Anmeldenummer: 92901796.0
(22) Anmeldetag: 07.01.1992
(51) Int. Cl.: F02D 35/02, F02D 41/14

(54) **EINRICHTUNG ZUM ERKENNEN VON MANGELHAFTEN VERBRENNUNGEN IN EINER BRENNKRAFTMASCHINE**
DEVICE FOR DETECTING FAULTY FIRING IN AN INTERNAL-COMBUSTION ENGINE
DISPOSITIF POUR LA DETECTION DE COMBUSTIONS DEFECTUEUSES DANS UN MOTEUR A COMBUSTION INTERNE

(30) Priorität: 24.01.1991 EP 91100924
(43) Veröffentlichungstag der Anmeldung: 10.11.1993
(73) Patentinhaber: SIEMENS AKTIENGESELLSCHAFT, 80333 München (DE)
(72) Erfinder: WIER, Manfred, D-8411 Wenzenbach (DE)
(86) Internationale Anmeldenummer: DE9200002
(87) Internationale Veröffentlichungsnummer: WO9213183

(56) Entgegenhaltungen:
- DE-A- 3 833 124
- GB-A- 2 091 000
- GB-A- 2 129 872
- PATENT ABSTRACTS OF JAPAN vol. 12, no. 152 (M-695) 11. Mai 1988 & JP,A,62 271 962 (NIPPONDENSO) 26. November 1987
- PATENT ABSTRACTS OF JAPAN vol. 7, no. 59 (M-199) 11. März 1983 & JP,A,57 203 865 (NIPPONDENSO) 14. Dezember 1982

## Beschreibung

Die Erfindung betrifft eine Einrichtung zum Erkennen von mangelhaften Verbrennungen in einer Brennkraftmaschine gemäß Oberbegriff von Anspruch 1.

Eine solche Einrichtung ist z.B. aus der deutschen Offenlegungsschrift 32 12 669 bekannt. Dabei wird während zwei Zeitintervallen nach dem oberen Totpunkt eines Zylinders der Brennraumdruck über einen Drucksensor erfaßt. Das erste Zeitintervall entspricht ungefähr der Dauer des Verbrennungsvorgangs und das zweite Zeitintervall schließt sich daran an. Die Meßsignale des Drucksensors werden während der beiden Zeitintervalle jeweils mit vorgegebenen Schwellwerten verglichen. Aus dem Erreichen oder Nichterreichen des jeweiligen Schwellwerts läßt sich dann eine Aussage über den Druckverlauf ableiten, über die ordnungsgemäße Verbrennungen von mangelhaften Verbrennungen oder sogar Verbrennungsaussetzern unterschieden werden können.

Eine ähnliche Einrichtung zeigt die DE-A-3 833 124.

Durch Alterung, Temperatureinflüsse, Fehler in der Signalaufbereitung usw. können dabei jedoch Drifteinflüsse beim Signal des Drucksensors auftreten. Die Auswertesicherheit wird dadurch mit der Zeit immer geringer. Im Extremfall kann der Drucksensor sogar völlig ausgefallen sein und gar kein Signal mehr liefern. Die bekannte Einrichtung würde in diesem Fall fälschlicherweise statt dem Ausfall des Drucksensors Verbrennungsaussetzer erkennen.

Die Aufgabe der vorliegenden Erfindung besteht demgegenüber darin, eine solche Einrichtung so weiterzubilden, daß Drifteinflüsse weitgehend ausgeglichen werden. Außerdem soll der Ausfall eines Drucksensors von der Einrichtung erkannt werden.

Die erfindungsgemäße Lösung ist im Anspruch 1 gekennzeichnet. Vorteilhafte Weiterbildungen finden sich in den Unteransprüchen.

Das erfindungsgemäße Konzept geht von dem Gedanken aus, Nullpunktverschiebungen, Drifterscheinungen usw. durch eine Differenzdruckmessung nicht zur Wirkung kommen zu lassen. Dazu wird der Druck vor und nach dem auf die Zündung folgenden oberen Totpunkt eines Zylinders (Zünd-OT) erfaßt. Der daraus gebildete Differenzdruck muß bei einer ordnungsgemäßen Verbrennung eine bestimmte Höhe erreichen. Erreicht er diese nicht, so liegt entweder eine mangelhafte Verbrennung oder sogar ein Verbrennungsaussetzer vor. Dies wird durch Vergleich des Differenzdrucks mit einem ersten Grenzwert festgestellt.

Weiterhin wird der Differenzdruck nicht nur bei jedem Zünd-OT ermittelt, sondern auch in gleicher Weise bei jedem Ladungswechsel-OT zwischen dem Auspufftakt und dem Ansaugtakt. Dadurch wird der Drucksensor einschließlich der gesamten Signalaufbereitung bei jedem Ladungswechsel-OT zyklisch überprüft. Da der eigentliche Meßbereich des Drucksensors in Höhe des Verbrennungsdrucks von ungefähr 30 bis 40 bar liegt, muß sein Drucksignal bei der Messung beim Ladungswechsel-OT mit den dort herrschenden Drücken von ungefähr 0,2 bar annähernd gleich Null sein. Der Differenzdruck ist dann ebenfalls annähernd gleich Null. Übersteigt daher dieser Differenzdruck einen zweiten Grenzwert, so muß ein Fehler beim Drucksensor oder in der Signalaufbereitung vorliegen.

Das erfindungsgemäße Konzept sieht also vor, durch die gleiche Messung bei jedem Zünd-OT die Güte der Verbrennung zu beurteilen und bei jedem Ladungswechsel-OT den eingesetzten Drucksensor samt angeschlossener Signalaufbereitung zu prüfen.

Die Erfindung wird anhand der Figuren näher erläutert. Dabei zeigen:
- Figur 1: ein vereinfachtes Blockschaltbild einer erfindungemäßen Einrichtung und
- Figur 2: den Druckverlauf in einem Zylinder zur Erläuterung der Funktionsweise der Einrichtung.

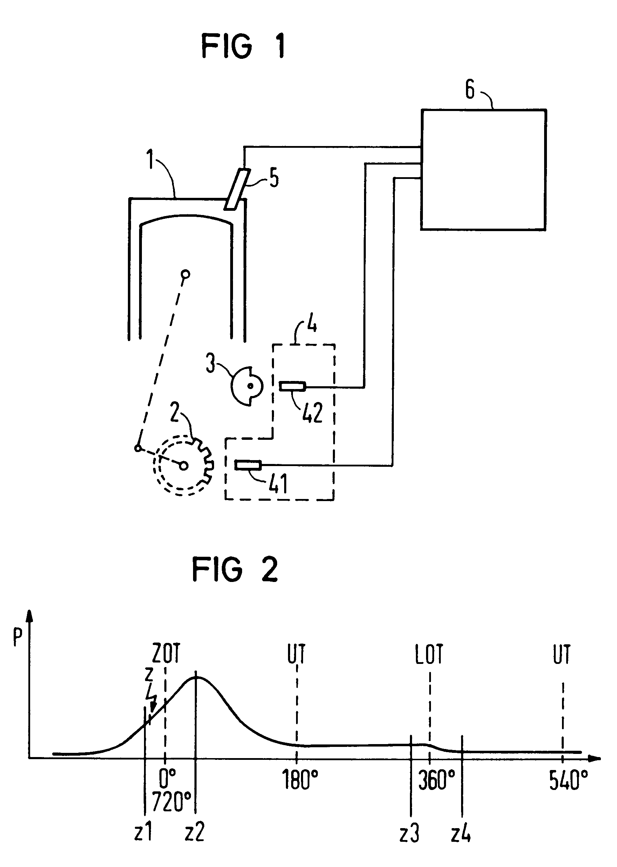

In Figur 1 ist mit 1 stellvertretend einer der Zylinder einer Mehrzylinder-Brennkraftmaschine bezeichnet. An der mit den einzelnen Kolben über Pleuel verbundenen Kurbelwelle ist ein Kurbelwellengeber 2 angeordnet. Mit der nicht dargestellten Nockenwelle der Brennkraftmaschine ist ein Nockenwellengeber 3 verbunden.

Ein Positionssensor 4 enthält einen Kurbelwellensensor 41 und einen Nockenwellensensor 42. Der Kurbelwellensensor 41 tastet über den Umfang des Kurbelwellengebers 2 verteilte Zähne sowie eine Bezugsposition ab und gibt dementsprechende Impulse an ein Auswerteteil 6. Der Nockenwellensensor 42 tastet den Nockenwellengeber 3 ab und gibt entsprechende Impulse an das Auswerteteil 6. Der Nockenwellengeber 3 weist dabei nur einen über Hälfte seines Umfangs erstreckten Zahn und sonst eine Lücke auf.

Das Auswerteteil 6 kann aus den Impulsen vom Kurbelwellensensor 41 und vom Nockenwellensensor 42 jeweils die Kolbenstellung z z jedes Zylinders bestimmen, d.h. seine Winkellage innerhalb einer Kurbelwellenumdrehung sowie die Lage innerhalb eines Taktzyklus.

Jedem Zylinder 1 ist ein Drucksensor 5 zugeordnet, der ein Drucksignal entsprechend dem jeweiligen Brennraumdruck an das Auswerteteil 6 liefert. Der Drucksensor 5 kann ein beliebiger Drucksensor sein, der innerhalb des Brennraums angeordnet ist. Möglich ist auch eine Anbringung außerhalb des Brennraums, z.B. in Form von piezokeramischen Unterlegscheiben an jeder Zündkerze.

Die Figur 2 zeigt den Verlauf des über den Drucksensor 5 erfaßten Brennraumdrucks p während eines Arbeitszyklus eines Zylinders einer Viertaktbrennkraftmaschine. Der Brennraumdruck p im folgenden einfach Druck genannt, ist dazu über zwei volle Kurbelwellenumdrehungen von 0 bis 720° mit den jeweiligen oberen und unteren Totpunkten ZOT, LOT, UT aufgetragen.

Von links beginnend steigt der Druck während des Kompressionstakts an und verdichtet das im Zylinder befindliche KraftstoffLuftgemisch. Im Zündzeitpunkt Z wird dieses Gemisch gezündet und die daraufhin einsetzende Verbrennung läßt den Druck über den oberen Totpunkt ZOT hinaus weiter ansteigen. Während des Arbeitstakts und dem daran anschließenden Auspufftakt geht der Druck dann langsam auf einen sehr geringen Wert zurück, bis er beim oberen Totpunkt zum Zeitpunkt des Ladungswechsels LOT den Atmosphärendruck erreicht. Daran schließt sich der Ansaugtakt an, während dem ein leichter Unterdruck herrscht, der dann schließlich wieder in den nächsten Kompressionstakt mit ansteigendem Druck übergeht.

Der Druckverlauf in Figur 2 ist eine idealisierte qualitative Darstellung. Das Druckmaximum kurz nach dem Zünd-OT ZOT liegt in Realität in Höhe von ungefähr 40 bar während die Drücke um den Ladungswechsel-OT LOT nur ungefähr um ± 0,2 bar liegen.

Das Auswerteteil 6 fragt bei jedem oberen Totpunkt ZOT, LOT den vom Drucksensor 5 gemessenen Druck an zwei Kurbelwellenstellungen z1, z2 bzw. z3, z4 ab. Die Kurbelwellenstellung z1 liegt dabei vor dem jeweiligen Totpunkt ZOT, LOT vorzugsweise vor dem für den jeweiligen Zylinder berechneten Zündzeitpunkt Z. Der Vorteil dabei ist, daß dieser Bereich gerade das Ende der Kompressionsphase darstellt und damit als Referenzdruck für die daran anschließende Druckerhöhung durch die Verbrennung besonders geeignet ist.

Die zweite Kurbelwellenstellung z2 wird so gewählt, daß sie möglichst im Druckmaximum des Druckverlaufs liegt. Dadurch wird der auszuwertende Differenzdruck zwischen den beiden Kurbelwellenstellungen z1, z2 maximal groß.

Das Auswerteteil 6 entnimmt diese zweite Kurbelwellenstellung z2 einem Kennfeld in Abhängigkeit von der für den Zylinder berechneten Kraftstoffeinspritzzeit. Diese Kraftstoffeinspritzzeit wird bekanntlich bei Motorsteuerungen last- und drehzahlabhängig gebildet und stellt damit auch eine last- und drehzahlabhängige Maßgröße dar.

Das Auswerteteil 6 bildet aus den in den beiden Kurbelwellenstellungen z1, z2 erfaßten Drücken eine Druckdifferenz. Diese Druckdifferenz ist damit ein Maß für die durch die Verbrennung bewirkte Druckerhöhung. Diese Druckdifferenz wird mit einem ersten Grenzwert verglichen, dessen Höhe so gewählt ist, wie dies einer gerade noch ausreichenden Verbrennung entspricht. Eine Druckdifferenz die kleiner als dieser erste Grenzwert ist, stellt daher eine mangelhafte Verbrennung oder sogar einen Verbrennungsaussetzer dar und wird dementsprechend von dem Auswerteteil 6 erkannt. Die Größe dieses ersten Grenzwerts ist durch Versuche unter verschiedenen Betriebsbedingungen ermittelt.

Beim Ladungswechsel-OT LOT werden wiederum die Drücke in den beiden Kurbelwellenstellungen z3, z4 erfaßt und daraus eine Druckdifferenz gebildet. Beim Ladungswechsel-OT LOT könnten die Kurbelwellenstellungen z3, z4 auch anders gewählt sein, werden aber der einfachheithalber bezüglich LOT gleich gewählt wie die Kurbelwellenstellungen z1, z2 bezüglich des vorhergehenden ZOT. Wie aus Figur 2 ersichtlich ist dort die resultierenden Druckdifferenz relativ klein. In der realen Ausführung ist sie annähernd gleich Null, da der eingesetzte Drucksensor 5 im Bereich des Verbrennungsdrucks von ungefähr 40 bar ausgelegt ist und daher bei Drücken um 0,2 bar beim Ladungswechsel-OT kein Signal mehr liefert. Die Druckdifferenz ist damit ebenfalls annähernd gleich Null, aber trotzdem aussagekräftig. Drifteinflüsse, Offsetsignale oder Kurzschlüsse in der Signalaufbereitung können dazu führen, daß die Druckdifferenz fälschlicherweise nicht mehr annähernd gleich Null ist. Es wird daher ein Fehler erkannt, wenn die Druckdifferenz größer als ein zweiter Grenzwert ist. Die Höhe dieses zweiten Grenzwertes legt dabei fest, welches Maß einer Abweichung noch toleriert werden kann und ab wann ein Fehler erkannt werden soll.

Gemäß einer weiteren Funktion prüft das Auswerteteil 6 laufend den in jedem Zylinder erzeugten Kompressionsdruck. Dazu wird ein Differenzsignal gebildet aus einem der Drücke, die an einer der beiden Kurbelwellenstellungen z3, z4 bei einem Ladungswechsel-OT LOT gemessen wurde und aus dem darauf folgenden gemessenen Druck an der ersten Kurbelwellenstellung z1 beim Zünd-OT ZOT. Da der Druck beim Ladungswechsel-OT LOT ungefähr gleich Null ist und der Druck beim Zünd-OT ZOT kurz vor dem Zündzeitpunkt Z gemessen wird, ist dieses Differenzsignal ein Maß für den von dem jeweiligen Zylinder erzeugten Kompressionsdruck.

Das Auswerteteil 6 summiert getrennt für jeden Zylinder diese Differenzsignale auf und bildet daraus laufend einen Mittelwert. Wird dieser Mittelwert kleiner als ein Referenzwert, so hat sich der Kompressionsdruck entsprechend verschlechtert. Das Auswerteteil 6 gibt in diesem Fall ein entsprechendes Signal ab, das entweder direkt zur Anzeige gebracht werden kann oder für die nächste Serviceuntersuchung des Fahrzeugs abgespeichert wird.

Das Auswerteteil 6 besteht im wesentlichen aus einem Mikrocom puter mit entsprechender Peripherie wie Schnittstellen, AD-Wandler usw. In der bevorzugten Ausführungsform sind die entsprechenden Funktionen in dem Mikrocomputersystem einer bereits vorhandenen Motorsteuerung ausgeführt.

### Bezugszeichenliste / Spezialbegriffe

- 1: Zylinder
- 2: Kurbelwellengeber
- 3: Nockenwellengeber
- 4: Positionssensor
- 41: Kurbelwellensensor
- 42: Nockenwellensensor
- 5: Drucksensor
- 6: Auswerteteil
- z1, z2, z3, z4: Kurbelwellenstellung
- ZOT: Zünd-OT
- LOT: Ladungswechsel-OT

## Patentansprüche

1. Einrichtung zum Erkennen von mangelhaften Verbrennungen in einer Brennkraftmaschine,
- mit je einem jedem Zylinder (1) zugeordneten Drucksensor (5), der ein Drucksignal entsprechend dem Brennraumdruck abgibt,
- mit einem Positionssensor (4), der mindestens ein Kurbelwellen- und Nockenwellenstellungssignal an einer bestimmten Kolbenstellung erzeugt,
- mit einem Auswerteteil (6), das aus dem Drucksignal und dem Kurbelwellenstellungssignal eine mangelhafte Verbrennung eines Zylinders feststellt,
**dadurch gekennzeichnet,**
daß das Auswerteteil (6)
- das Drucksignal jedes Zylinders an zwei Kurbelwellenstellungen (z1, z2, z3, z4) vor und nach jedem oberen Totpunkt abfragt und daraus eine Druckdifferenz bildet
- eine mangelhafte Verbrennung erkennt, wenn die Druckdifferenz bei einem oberen Totpunkt zwischen Kompressionstakt und Arbeitstakt, Zünd-OT, (ZOT) kleiner einem ersten Grenzwert ist,
- einen Fehler bei der Druckerfassung erkennt, wenn die Druckdifferenz bei einem oberen Totpunkt zwischen Auspufftakt und Ansaugtakt, Ladungswechsel-OT, (LOT) größer einem zweiten Grenzwert ist.

2. Einrichtung nach Anspruch 1
**dadurch gekennzeichnet,**
daß die erste Kurbelwellenstellung (z1) vor jedem oberen Totpunkt vor dem jeweilig eingestellten Zündwinkel liegt und daß die zweite Kurbelwellenstellung (z2) nach jedem oberen Totpunkt last- und drehzahlabhängig gewählt ist.

3. Einrichtung nach Anspruch 2
**dadurch gekennzeichnet,**
daß das Auswerteteil (6) die zweite Kurbelwellenstellung (z2) nach jedem oberen Totpunkt aus einem Kennfeld entnimmt, abhängig von der jeweiligen last- und drehzahlabhängig gebildeten Kraftstoffeinspritzzeit.

4. Einrichtung nach Anspruch 1,
**dadurch gekennzeichnet,**
daß das Auswerteteil (6) aus einem der Drucksignale bei einem Ladungswechsel-OT (LOT) und dem darauffolgenden Drucksignal vor dem Zünd-OT (ZOT) ein Differenzsignal bildet, das ein Maß für die Höhe des Kompressionsdrucks ist.

5. Einrichtung nach Anspruch 4,
**dadurch gekennzeichnet,**
daß das Auswerteteil (6) für jeden Zylinder die gebildeten Differenzsignale aufsummiert, eine Mittelwertbildung vornimmt und einen verschlechterten Kompressionsdruck eines Zylinders feststellt, wenn der zugehörige Mittelwert kleiner einem Referenzwert wird.

## Claims

1. Device for detecting faulty firing in an internal-combustion engine,
- having assigned to each cylinder (1) a respective pressure sensor (5), which emits a pressure signal corresponding to the combustion-chamber pressure,
- having a position sensor (4), which generates at least one crankshaft position signal and camshaft piston signal at a particular piston position,
- having an evaluation section (6), which establishes from the pressure signal and the crankshaft position signal faulty firing of a cylinder,
characterized in that the evaluation section (6)
- inquires the pressure signal of each cylinder at two crankshaft positions (z1, z2, z3, z4) before and after each top dead centre and forms a pressure differential from them
- detects faulty firing if the pressure differential at a top dead centre between compression stroke and power stroke, ignition top dead centre (iTDC), is less than a first limiting value,
- detects an error in the pressure measurement if the pressure differential at a top dead centre between exhaust stroke and induction stroke, charge-change top dead centre (chTDC), is greater than a second limiting value.

2. Device according to Claim 1, characterized in that the first crankshaft position (z1) before each top dead centre lies before the respectively set ignition angle and in that the second crankshaft position (z2) after each top dead centre is chosen load-dependently and speed-dependently.

3. Device according to Claim 2, characterized in that the evaluation section (6) takes the second crankshaft position (z2) after each top dead centre from a characteristic map, as a function of the respective load-dependently and speed-dependently formed fuel injection time.

4. Device according to Claim 1, characterized in that the evaluation section (6) forms from one of the pressure signals at a charge-change top dead centre (chTDC) and the following pressure signal before the ignition top dead centre (iTDC) a differential signal, which is a measure of the level of the compression pressure.

5. Device according to Claim 4, characterized in that the evaluation section (6) adds up the formed differential signals for each cylinder, carries out averaging and establishes a worsened compression pressure of a cylinder if the associated average value is less than a reference value.

## Revendications

1. Dispositif de détection de combustions défectueuses dans un moteur à combustion interne, comprenant
- associé à chaque cylindre (1), un capteur de pression (5) qui envoie un signal de pression correspondant à la pression dans la chambre d'explosion,
- un capteur de position (4) qui génère au moins un signal de position de vilebrequin et d'arbre à cames pour une position déterminée de piston,
- une partie d'évaluation (6) qui constate, à partir du signal de pression et du signal de position de vilebrequin, une combustion défectueuse dans un cylindre,
caractérisé en ce que
la partie d'évaluation (6)
- interroge le signal de pression de chaque cylindre en deux positions de vilebrequin avant et après chaque point mort haut (z1, z2, z3, z4) et en déduit une différence de pression,
- détecte une combustion défectueuse lorsque la différence de pression pour un point mort haut entre temps de compression et temps moteur, allumage-OT (= point mort haut d'allumage) (ZOT) est plus petite qu'une première valeur limite,
- détecte une erreur lors de l'acquisition de la pression lorsque la différence de pression pour un point mort haut entre temps d'échappement et temps d'admission, mouvement de gaz-OT, (LOT) est plus grande qu'une deuxième valeur limite.

2. Dispositif selon la revendication 1,
caractérisé en ce que
la première position de vilebrequin (z1) avant chaque point mort haut se trouve avant l'angle de came respectivement réglé et la deuxième position de vilebrequin (z2) après chaque point mort haut est choisie en fonction de la charge et de la vitesse de rotation.

3. Dispositif selon la revendication 2,
caractérisé en ce que
la partie d'évaluation (6) déduit d'un diagramme caractéristique la deuxième position de vilebrequin (z2) après chaque point mort haut, en fonction du temps respectif d'injection de carburant établi en fonction de la charge et de la vitesse de rotation.

4. Dispositif selon la revendication 1,
caractérisé en ce que
la partie d'évaluation (6) forme, à partir d'un des signaux de pression lors d'un mouvement de gaz-OT (LOT) et le signal de pression suivant avant l'allumage-OT (ZOT), un signal de différence qui est une mesure de la valeur de la pression de compression.

5. Dispositif selon la revendication 4,
caractérisé en ce que
la partie d'évaluation (6) fait la somme, pour tous les cylindres, des signaux de différence formés, effectue un calcul de la valeur moyenne et constate une mauvaise pression de compression dans un cylindre lorsque la valeur moyenne associée est plus petite qu'une valeur de référence.
